# EUROPEAN PATENT APPLICATION

(11) **EP 4 736 983 A1**
(43) Date of publication of application: **06.05.2026**
(21) Application number: 24210987.4
(22) Date of filing: 05.11.2024
(51) Int. Cl.: B01D 25/26, B01D 29/05, B01D 29/41, B01D 29/56, B01D 29/58, B01D 63/08

(54) **FILTRATION DEVICE FOR FILTERING A MEDIUM, METHOD OF ASSEMBLING A FILTRATION DEVICE, AND METHOD OF CONDUCTING A FILTRATION PROCESS**

(71) Applicant: Sartorius Stedim Biotech GmbH, 37079 Göttingen (DE)
(72) Inventor: JAKOB, Fabian, 37079 Göttingen (DE); FRIESE, Thomas, 37079 Göttingen (DE); MEYER, Tim, 37079 Göttingen (DE)
(74) Representative: Prinz & Partner mbB

(57) **Abstract**

A filtration device (10) for filtering a medium, in particular a small-scale filtration device for the production and/or processing of biopharmaceuticals, comprises: a top cover (12) having an unfiltrate inlet (14) and a bottom cover (16) having a filtrate outlet (18), and a plurality of filter supports (28), arranged as a stack between the top cover (12) and the bottom cover (16) along a vertical axis. Each filter support (28) is provided with a flat filter (24), especially a membrane. Each flat filter (24) is sealed to the filter support (28) with a filtrate side facing the respective filter support (28) and an unfiltrate side facing away from the respective filter support (28). The filtration device further comprises one or more intermediate elements (30), preferably one or more intermediate plates. A first intermediate element (30) is arranged between the stacked filter supports (28), dividing the filter supports (28) into an upper group (32) above the intermediate element (30) and a lower group (34) below the intermediate element (30). The first distribution flow paths lead from the unfiltrate inlet (14) to all unfiltrate sides of the flat filters (24) of the upper group (32). The first intermediate element (30) has a structure that blocks the first distribution flow paths from reaching the unfiltrate sides of the flat filters (24) of the lower group (34) and provides first collecting paths for collecting the medium that has passed through the flat filters (24) of the upper group (32). Second distribution flow paths lead from the first collecting paths to all unfiltrate sides of the flat filter(s) (24) of the lower group (34). Second collecting paths collect the medium that has passed through the flat filter(s) (24) of the lower group (34).

## Description

The invention relates to a filtration device for filtering a medium, in particular a small-scale filtration device for the production and/or processing of biopharmaceuticals. The invention also relates to a method of assembling such a filtration device, and to a method of conducting a filtration process using such a filtration device.

In the field of filtration, especially within biopharmaceutical processes, it is common to require the use of various filter types in combination to achieve the desired purity, concentration, or quality of the filtered medium. Depending on the specific filtration task, different filters are used in sequence, e.g., depth filters for good retention of larger particles, followed by filters for reducing bioburden or sterile filters. The combination and arrangement of these filters are highly dependent on the characteristics of the medium to be filtered and can vary according to customer needs and the particular process.

Up to now, the solution to this need involved connecting different filters in series using hoses or pipes with connectors, which leads to complicated assemblies that had to be manually assembled and, in many cases, had to be validated at significant expense. Connection points are always weak points within the filtration setup as they must maintain sterility, handle the necessary pressure, and be leakproof. Every connection point introduces the possibility of malfunction during the process.

Furthermore, the known complex assemblies increase the total enclosed volume (known as holdup volume), which is the volume of liquid retained within the system. Holdup volume is a critical factor in biopharmaceutical filtration because the media used are often very expensive. Reducing residual liquid left inside the filtration devices is therefore essential. In combination with new therapeutic options, which are sometimes developed on a user-specific basis, this results in very small batch volumes that can barely be processed with conventional filtration systems, as these batch volumes may be smaller than the holdup volume of the system.

In response to these issues, developments in the market have aimed to optimize holdup volume through developments such as flat filters mounted on filter support plates, rather than using pleated elements in capsules. Another approach combines different filters within a single unit to eliminate the need for connectors. Hose connections, in particular, can be problematic at higher process or testing pressures.

Filtration systems that are designed without hose connections, such as preassembled, pre-sterilized, and self-contained systems as described, for example, in WO 2018/215246 A1 or WO 2022/074151 A1, are already known, allowing setups to be realized in a space-saving manner and minimizing possible defects. However, such assembled, pre-sterilized, and self-contained systems are typically constructed and designed for large medium volumes to be filtered. Minimizing the holdup volume plays only a minor role.

Also known are systems with filter cassettes that are secured in a holder and can be operated in different zones that are separated from each other by intermediate plates. These are systems that are not closed and do not work without a holder.

Further known are filtration devices constructed from support plates that guide the medium through a sealed membrane and collect the filtered medium at the outlet. These filter elements come in different designs, with variations in how the medium flows, e.g., the filtered medium can be bundled centrally or in a peripheral region of the device.

WO 2019/020467 A1 shows a filtration system that combines two filter capsules in one housing, allowing, e.g., a pre-filter and a main filter to be combined into a single device. However, these capsules use pleated membranes and have a relatively high dead volume, making them unsuitable for very small batch volumes.

WO 2019/243289 A1 presents an approach involving the stacking of membranes with different filtration or cleaning functions. This system, configured in a cassette format, uses cassettes fixed in a holder, with individual filter modules divided by "separation interfaces". Likewise, this filter module design is large and has a high dead volume, as well as requiring complex assembly that poses additional challenges to maintaining sterility.

The object of the invention is to address the shortcomings explained above. The solution is provided by a filtration device according to claim 1, by a method of assembling such a filtration device according to claim 14, and by a method of conducting a filtration process using such a filtration device according to claim 17. Advantageous and expedient embodiments are apparent from the dependent claims.

The invention provides a filtration device for filtering a medium, in particular a small-scale filtration device for the production and/or processing of biopharmaceuticals. The filtration device comprises: a top cover having an unfiltrate inlet and a bottom cover having a filtrate outlet, and a plurality of filter supports, arranged as a stack between the top cover and the bottom cover along a vertical axis. Each filter support is provided with at least one flat filter, especially a membrane. Each flat filter is sealed to the filter support with a filtrate side facing the respective filter support and an unfiltrate side facing away from the respective filter support. The filtration device further comprises one or more intermediate elements, preferably one or more intermediate plates. A first intermediate element is arranged between the stacked filter supports, dividing the filter supports into an upper group above the intermediate element and a lower group below the intermediate element. The first distribution flow paths lead from the unfiltrate inlet to all unfiltrate sides of the flat filters of the upper group. The first intermediate element has a structure that blocks the first distribution flow paths from reaching the unfiltrate sides of the flat filters of the lower group and provides first collecting paths for collecting the medium that has passed through the flat filters of the upper group. Second distribution flow paths lead from the first collecting paths to all unfiltrate sides of the flat filter(s) of the lower group. Second collecting paths collect the medium that has passed through the flat filter(s) of the lower group.

It is to be noted that the upper group and/or the lower group and/or any further group of filter supports may include only a single filter support, and thus only a single flat filter, as will be explained in more detail later.

Regarding the terms "vertical axis" and "vertical direction", it is to be understood that the filtration device is designed such that gravity at least assists the flow of the medium to be filtered through the device from the unfiltrate inlet to the filtrate outlet. Accordingly, the typical use position of the filtration device is an upright position with the top cover located above the bottom cover. Of course, it is not necessary that the "vertical direction" or the "vertical axis" is perfectly vertical. Moreover, the filtration device may also be used in other positions, such as in a horizontal orientation, since the medium is mainly urged through the filtration device by an externally applied pressure. Thus, also terms such as "top," "bottom," "upper," and "lower" are not to be understood in a limiting sense; they are mainly used to indicate positions opposite to another, such as an upper side and a lower side of a filter support plate, as will be explained later.

While the "first" intermediate element is referred to as such, it is to be understood that it can be the only one, i.e., it is not mandatory that further intermediate plates are used, although this is an option, as will be explained later.

An intermediate element may be a one-piece element or a multi-piece element made up of several pieces and/or including further functional components.

A group of filter supports may consist of just one filter support, or it can include several stacked filter supports (without an intermediate element inserted in-between).

The first distribution flow paths direct unfiltrate (unfiltered medium) from the unfiltrate inlet to all unfiltrate sides of the flat filters of the upper group of filter supports in parallel. If there is only one flat filter, the unfiltrate is only directed to that flat filter by the distribution flow paths.

If only one intermediate element is present in the filtration device, the second collecting paths are represented by filtrate guiding channels of the filter supports of the lower group, leading the filtrate (filtered medium) to the filtrate outlet. In embodiments with an additional second intermediate element and a further group of filter supports below the lower group, the second collecting paths are provided by the second intermediate element.

Generally, the concept of the filtration system can be scaled up to any reasonable number of additional groups of filter supports, as needed for specific filtration tasks. Each group is separated from its neighboring group(s) by an intermediate element.

Accordingly, the invention generally provides a flow scheme with several groups of flat filters being connected in series, while the flat filters of each group are connected in parallel. The invention enables, thus, the combination of different filter types with varying filter areas within a single, closed filtration device. This means that a complete filtration process involving multiple filtration stages can be conducted in one compact filtration device, eliminating the need for hose connections between different filter units and optimizing the holdup volume during the filtration process. Moreover, the risk of leakage and contamination is reduced, thus enhancing sterility.

For example, the upper group could contain pre-filters, while the lower group contains main filters. Alternatively, the upper group could be equipped with first-stage sterilizing filters, and the lower group with second-stage sterilizing filters. Other typical filtration processes using different types of filters include virus filtration, multi-stage filtration, cell clarification and depth filtration.

The economic advantages of the invention are significant. As a configure-to-order (CTO) product, it can largely be manufactured using automated processes, eliminating the need for subsequent manual assembly of connections. This simplifies the manufacturing process and reduces potential weak points, further ensuring product integrity and sterility.

A key component of the filtration device is the intermediate element, which blocks the medium flow to the filter supports of the lower group and bundling the medium flow, so that the medium is guided to the lower group, where it resumes parallel flow to the flat filters.

According to an embodiment of the invention, all or several of the filter supports are provided on disc-shaped filter support plates which are stacked between the top cover and the bottom cover.

Preferably, one filter support is provided on the upper side of each filter support plate and another filter support is provided on the lower side of each filter support plate. However, it is also possible that a filter support plate has only one filter support, either on its upper side or its lower side.

In order to allow flexible configurations of the filtration device, the filter support plates all have the same shape and horizontal dimensions. Moreover, the intermediate element can be formed so as to have the same outer shape and horizontal dimensions as the filter support plates.

A filter support may also be provided on the lower side of the top cover and/or on the upper side of the bottom cover. With respect to the upper group or the lower group, such a filter support may be used in addition to, or instead of, filter supports provided on filter support plates. According to a practicable "minimum configuration" of the filtration device, the upper group above the intermediate element consists of two filter supports provided on both sides of one filter support plate, and the lower group below the intermediate element consists of one filter support provided on the upper side of the bottom cover.

While it is not required that the intermediate element has a filter support, the compactness of the filtration device may further be enhanced by providing the upper side and/or the lower side of the intermediate element with a filter support. A filter support on the upper side would belong to the upper group, whereas a filter support on the lower side of the intermediate element would belong to the lower group.

According to a preferred design of the filtration device, the filter supports provide flow paths, especially filtrate guiding channels on their upper and/or lower sides, leading to at least one vertical filtrate collection channel, which is formed by corresponding central openings of the filter supports. The first intermediate element provides a horizontal barrier in the vertical filtrate collection channel, forcing the medium collected by the filter supports of the upper group in an upper portion of the vertical filtrate collection channel above the horizontal barrier to flow to the second distribution flow paths.

As already mentioned, in embodiments with only one intermediate element and two groups of filter supports, the second collecting paths, which collect the medium that has passed through the flat filters of the lower group, are at least partially provided by the filter support(s) of the lower filter supports and lead to a lower portion of the vertical filtrate collection channel below the horizontal barrier from where the filtrate can leave the filtration device.

In embodiments with at least two intermediate elements and three groups of filter supports, the second collecting paths are provided by a second intermediate element arranged between the lower group and a further group of filter supports below the second intermediate plate. This means that in this case the second collecting paths still collect the medium that has passed through the flat filters of the lower group, but since there is at least one further group of filter supports with flat filters, the collected medium must not leave the filtration device before it has passed through the flat filters of the further group.

While the individual filter supports may have different outer shapes, it is preferred that at least some of the filter supports are shaped identically, especially the filter supports within a single group, i.e., all of the filter supports of the upper group and/or all of the filter supports of the lower group and/or all of the filter supports of a further group. This allows a design where any desired number of filter supports can be easily integrated into the filtration device, thus enabling a variation in the total filter area as needed.

For redundant filtration it is useful that the flat filters of the upper group have the same characteristics as the flat filters of the lower group. However, for most combination filtration tasks it makes sense that the flat filters of the upper group have characteristics different from the characteristics of the flat filters of the lower group, especially with respect to nominal pore size and/or nominal filter retention (efficiency) and/or nominal volume flow.

Irrespective of their characteristics, it is desirable that at least some of the flat filters are shaped identically, preferably the flat filters of the upper group and/or the flat filters of the lower group. This includes the option that the filters of all groups are shaped identically. The latter option allows flexibility in the arrangement of the flat filters since the same type of filter support can be used for any type of filter.

According to an aspect of the invention, the top and bottom covers, the filter support plates and the intermediate element(s) have outer welding sections welded to each other so as to form a closed and rigid outer housing portion of the filtration device. This design ensures operational stability across a wide range of pressures, typically between 0.001 bar and 10 bar, preferably between 0.1 bar and 6 bar, depending on factors like filter media, the kind of medium to be filtered, viscosity, and stability of the sealing of the flat filters on the filter supports.

The top and bottom covers, as well as the filter support plates, are preferably designed with a circular outer periphery with similar outer diameters relative to the vertical axis, ensuring symmetry and stability of the filtration device.

The design of the intermediate element(s) can be modified according to specific needs, such as incorporating additional functionalities, which may require altering the thickness or other dimensions of the intermediate element(s) to provide sufficient installation space.

According to a first option, at least one of the intermediate elements provides a venting means, the venting means including a venting passage and preferably further including a valve. The venting means can be used to allow air to escape from the filtration device. On the other hand, the venting passage can also be used as an air or gas entry passage for performing an integrity test of the flat filters. The valve can either be integrated in the venting passage, i.e., within the filtration device, or it can be connected to the venting passage outside of the housing of the filtration device.

The venting passage is preferably formed at the outer periphery of the intermediate element.

In order to prevent medium from leaking through the venting passage and to ensure sterility, an (internal) inlet of the venting passage may be sealed with a hydrophobic membrane, such as a membrane made of PTFE.

According to a second option, at least one of the intermediate elements provides, or is connected to, a sampling port. This would allow to take samples of filtrate after having passed a specific flow path and enables the possibility to carry out certain analyses with respect to the product or in-process controls, e.g., turbidity or others. If it is detected that certain specifications are not met, this can also be an indication that the filter is not functioning properly.

The invention also provides a method of assembling a filtration device defined above for a desired filtration process to be conducted with the filtration device. The assembly method comprises the following steps: determining a number of filtration stages required by the filtration process; determining a number of different groups of filter supports, each group corresponding to one of the filtration stages; determining a number of intermediate elements based on the number of different groups; selecting a suitable flat filter type for each group; determining a total filter area for each group; determining a number of flat filters and a number of filter supports based on the respective total filter area for each group; sealing the flat filters onto the filter supports of the respective group; building a stack of the filter supports of each group; and stacking the groups with the intermediate elements inserted between the groups in an order corresponding to an order of the filtration stages.

As already mentioned, the minimum number of filter supports of a group is one, especially when the lower group does not include filter supports provided on a filter support plate, but only a single filter support provided on the upper side of the bottom cover.

In addition, the assembly method may include the following further steps: welding the filter support plate(s) and the intermediate element(s) together; welding an uppermost filter support plate to the top cover and/or welding a lowermost filter support plate to the bottom cover.

According to an alternative configuration with a separate housing, the assembly method may include the following further step: inserting the filter support plate(s) and the intermediate element(s) between the groups of the filter supports into a housing, the housing including the top cover and the bottom cover.

The invention further provides a method of conducting a filtration process using a filtration device defined above. The filtration process conducted in the filtration device is or includes one of the following: sterile filtration, virus filtration (pre- and main filtration), redundant sterile filtration, multi-stage filtration, cell clarification, and depth filtration.

Further features and advantages of the invention will become apparent from the following description and from the accompanying drawings to which reference is made. In the drawings:
- Figure 1 shows a partially sectional side view of a filtration device not in accordance with the invention;
- Figure 2 shows a partially sectional side view of a filtration device in accordance with the invention;
- Figure 3 shows a sectional perspective side view of the filtration device of Figure 2; and
- Figure 4 shows a detail of a sectional side view of a variant of a filtration device in accordance with the invention.

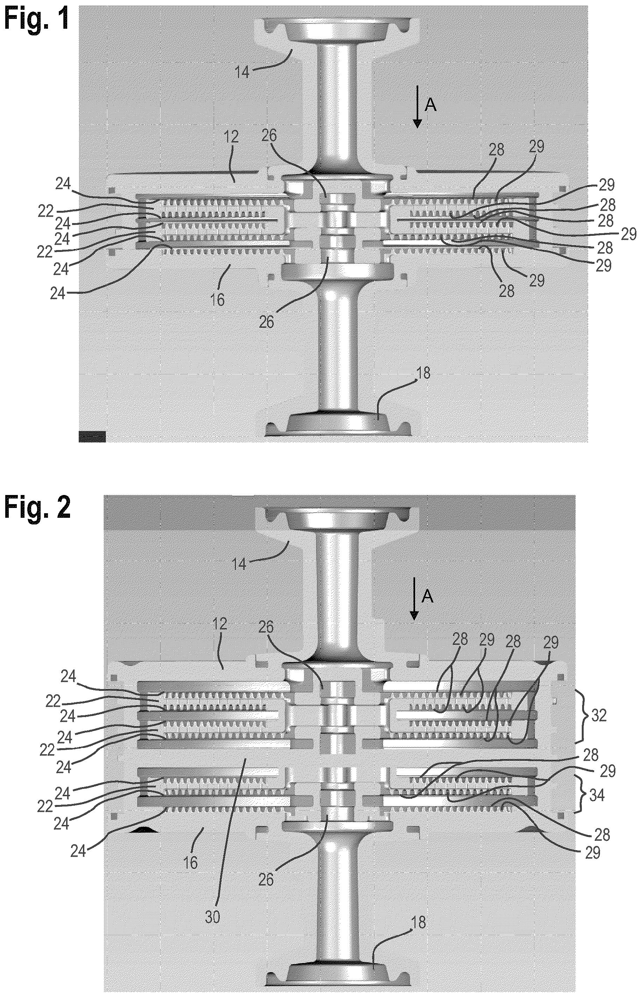

In Figure 1, a small-scale filtration device 10' for the production and/or processing of biopharmaceuticals is shown in its typical upright use position. A downward vertical direction 'A' indicates the general flow direction of the medium to be filtered through the filtration device 10'. In the following, terms such as "top", "bottom", "upper", "lower" etc. relate to the upright use position of the filtration device 10' and the vertical direction 'A' shown in Figure 1.

The filtration device 10' comprises a top cover 12 having a central unfiltrate inlet 14 and a bottom cover 16 having a central filtrate outlet 18. The unfiltrate inlet 14 and the filtrate outlet 18 may be provided with known connection fittings, such as Luer fittings, Sanitary fittings, Olive fittings, hose barbs, etc. Between the top cover 12 and the bottom cover 16 a plurality of disc-shaped filter support plates 22 are positioned. The top cover 12, the bottom cover 16 and the filter support plates 22 each have a circular outer periphery with similar outer diameters with respect to the vertical axis.

Each filter support plate 22 is configured to support two substantially identically shaped flat filters 24, especially round-shaped filter membranes. Irrespective of its shape, each flat filter 24 may be a single-layer, double-layer or multi-layer filter.

One flat filter 24 is provided on the upper side and another one on the lower side of each filter support plate 22. In particular, each filter support plate 22 has an upper filter support 28 on its upper side with one flat filter 24 being placed on the upper filter support 28, and a lower filter support 28 on the lower side of the filter support plate 22 with the other flat filter 24 being placed on the lower filter support 28. Filter supports 28 can be structures formed directly on the respective sides of the filter support plates 22 or separate elements placed thereon. The filter supports 28 include filtrate guiding channels 29, which will be explained later.

The filter support plates 22 with their filter supports 28 are stacked between the top cover 12 and the bottom cover 16 along the vertical direction 'A'.

The top cover 12 and/or the bottom cover 16 may also be configured to support an additional flat filter 24. In particular, the top cover 12 may have a filter support 28 on its lower side with a flat filter 24 being placed thereon, and/or the bottom cover 16 may have a filter support 28 on its upper side with a flat filter 24 being placed thereon. The filter supports 28 can be structures directly formed on the respective sides of the top and/or bottom cover 12, 16 or separate elements placed thereon. Accordingly, the filter supports 28 of the top cover 12 and/or the bottom cover, if any, also belong to the total stack of filter supports 28 in the filtration device 10'.

Depending on the desired total filter area, the total number of filter supports 28, and thus the corresponding total number of flat filters 24, can be varied.

The top cover 12, the bottom cover 16 and the filter support plates 22 are welded together to form the filtration device 10'. In particular, the top cover 12, the bottom cover 16 and each filter support plate 22 have an inner portion with an inner welding section and an outer portion with an outer welding section. The inner portions have an annular shape fully encircling a central vertical filtrate collection channel 26 which leads to the filtrate outlet 18. The outer welding sections have an annular shape fully encircling a filter area of the filtration device 10'. The process of forming the filtration device 10' may include heat welding or ultrasonic welding or other suitable connection techniques.

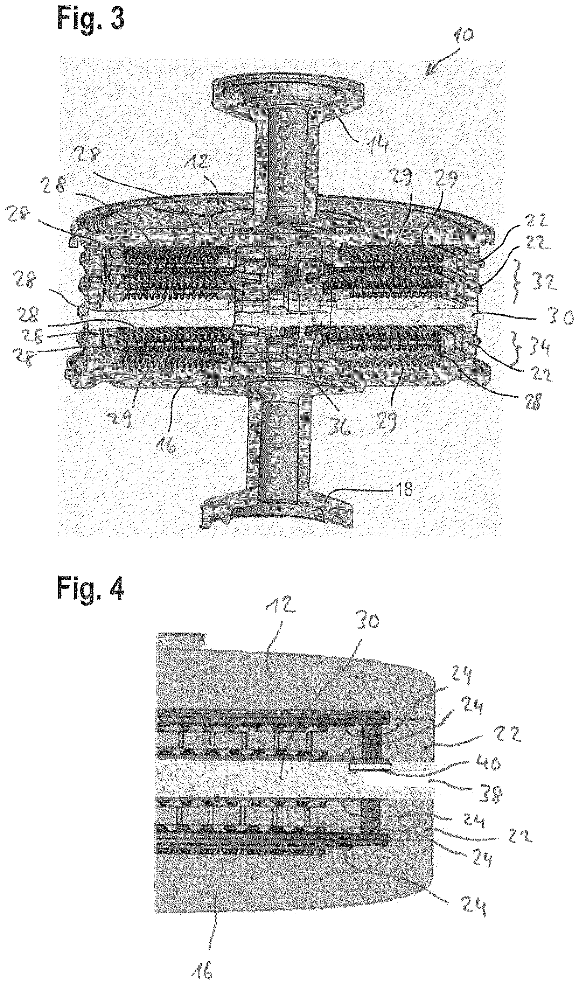

Each filter support plate 22 has an inner sealing zone formed in the inner portion, and an outer sealing zone formed in the outer portion. A flat filter 24, typically a membrane, is placed on the filter support 28, thus covering the filtrate guiding channels 29, and sealed to the inner and outer sealing zones (see also Figure 3). Sealing zones and, as already mentioned, filtrate guiding channels 29 are formed on both sides of the filter support plate 22, i.e., on its upper and lower sides. Accordingly, a flat filter 24 resting on the upper filter support 28 is sealed to the sealing zones of the upper side and another flat filter 24 resting on the lower filter support 28 is sealed to the sealing zones of the lower side of the filter support plate 22. Each sealed flat filter 24 has a filtrate side facing the respective filter support 28 and an unfiltrate side facing away from the respective filter support 28.

All possible flow paths through the filtration device 10' follow the same principle. The medium, after having entered through the unfiltrate inlet 14, is guided via distribution flow paths to the unfiltrate sides of all flat filters 24, i.e., there is a parallel flow to the unfiltrate sides of the flat filters 24. After having passed through any of the flat filters 24, the medium is guided via the filtrate guiding channels 29 formed in the respective filter support 28 to the vertical filtrate collection channel 26 to leave the filtration device 10' through the filtrate outlet 18.

The filtration device 10 shown in Figures 2 and 3 is similar to the filtration device 10' shown in Figure 1 and described above in that the same components are used, especially the top cover 12, the bottom cover 16 and the disc-shaped filter support plates 22 with the filter supports 28 and the flat filters 24 sealed thereon. In addition to the filter support plates 22, the top cover 12 and/or the bottom cover 16 may also be configured to include a filter support 28 on its/their side/s facing the inside of the filtration device 10 with a flat filter 24 sealed thereon.

The major difference compared to the filtration device 10' shown in Figure 1 is that the filtration device shown in Figures 2 and 3 further includes an intermediate element 30 arranged in the stack of the filter supports 28. In particular, as shown in Figures 2 and 3, the intermediate element 30 divides the filter supports 28 into an upper group 32 above the intermediate element 30 and a lower group 34 below the intermediate element 30. In the specific variant shown in Figures 2 and 3 the upper group consists of four filter supports 28, i.e., two on each side of the two filter support plates 22 located above the intermediate element 30, and the lower group 34 consists of three filter supports 28, i.e., two on each side of the one filter support plate 22 below the intermediate element 30 and one on the upper side of the bottom cover 16. Likewise, the flat filters 24 sealed on the filter supports 28 can be divided into the same groups.

It is to be noted that a setup of the filtration device 10 without any filter support plate 22 below the intermediate element 30 is possible. In this case, only the bottom cover 16 has a filter support 28 with a flat filter 24 sealed thereon, i.e., the lower group 34 only consists of a single filter support 28 with a single flat filter 24.

In the embodiment shown in Figures 2 and 3, all filter support plates 22 are shaped identically. The same is true for the filter supports 28. Especially with respect to the filter supports 28, "shaped identically" means that the size and outer shape of the filter supports 28 are the same (at least within manufacturing tolerances), whereas material and structural details may vary. For example, the filter supports 28 of the upper group 32 may be adapted to carry a first type of flat filters 24 and the filter supports 28 of the lower group 34 may be adapted to carry a different second type of flat filters 24. The filter types may differ in nominal pore size and/or nominal filter retention and/or nominal volume flow.

As can be best seen in Figure 3, the intermediate element 30 basically is a disc-shaped plate having the same horizontal dimensions as the filter support plates 22. The intermediate element 30 has inner and outer welding sections on its upper side and on its lower side, similar to those of the filter support plates 22, so that it can be welded to a neighboring filter support plate 22 of the upper group 32 and to a neighboring filter support plate 22 of the lower group 34. By welding together the top cover 12, the filter support plates 22, the intermediate element 30 and the bottom cover 16, a closed and rigid outer housing portion of the filtration device 10 is formed.

The intermediate element 30 may be more complex than the one shown in Figures 2 and 3, and/or it may include several sub-components as will be explained later.

In any event, the intermediate element 30 has a structure that blocks the distribution flow paths which start at the unfiltrate inlet 14 (hereinafter called "first distribution paths") from reaching the unfiltrate sides of the flat filters 24 of the lower group 34 below the intermediate element 30. The intermediate element 30 further provides first collecting paths for collecting the medium that has passed through any of the flat filters 24 of the upper group 32. The blocking structure and/or the first collecting paths may simply be formed by solid portions of the intermediate element 30.

The first collecting paths of the intermediate element 30 are connected to second distribution flow paths of the filtration device 10 via one or more vertical passageways, such as the annular passageway 36 shown in Figure 3. The second distribution flow paths lead to all unfiltrate sides of the flat filters 24 of the lower group 34.

The filtrate device 10 further provides second collecting paths for collecting the medium that has passed through any of the flat filters 24 of the lower group 34 and for guiding the collected medium to the vertical filtrate collection channel 26. These second collecting paths are typically formed by the filtrate guiding channels 29 formed in the filter supports 28 of the lower group 34, including filtrate guiding channels 29 of the bottom cover 16 if it has a filter support 28.

It is to be noted that the intermediate element 30 divides the vertical filtrate collection channel 26 into an upper portion and a lower portion. In particular, the vertical filtrate collection channel 26 is interrupted between the upper group 32 and the lower group 34 of filter supports 28 by a mainly solid inner portion of the intermediate element 30, preventing medium filtered by the flat filters 24 of the upper group 32 and collected in the upper portion of the vertical filtrate collection channel 26 from immediately leaving the filtration device 10 through the filtrate outlet 18.

Due to the horizontal barrier formed by the solid inner portion and the other particularities of the structure of the intermediate element 30, a characteristic flow scheme is enabled that will be described below.

Similar to the filtration device 10' shown in Figure 1, the medium, after having entered through the unfiltrate inlet 14, is guided via the first distribution flow paths to the unfiltrate sides of the flat filters 24, but only of the flat filters 24 of the upper group 32 of filter support plates 22. The first distribution flow paths do not lead to the flat filters 24 of the lower group 34 due to the blocking structure of the intermediate element 30. Accordingly, there is a parallel flow only to the unfiltrate sides of the flat filters 24 of the upper group 32.

After having passed through any of the flat filters 24 of the upper group 32, the medium is guided via the filtrate guiding channels 29 of the filter supports 28 to the upper portion of the vertical filtrate collection channel 26. As explained before, the blocking structure of the intermediate element 30 does not allow the medium to immediately leave the filtration device through the filtrate outlet 18. Rather, the medium is collected by the first collecting paths of the intermediate element 30 and guided to the second distribution flow paths of the filtrate device 10. Via the second distribution flow paths, the medium is distributed to all unfiltrate sides of the flat filters 24 of the lower group 34, i.e., there is a parallel flow to the unfiltrate sides of the flat filters 24 of the lower group 34.

After having passed through any of the flat filters 24 of the lower group 34, the medium is then collected by the second collecting paths and guided to the lower portion of the vertical filtrate collection channel 26 to leave the filtration device 10 through the filtrate outlet 18.

As described above, the flow scheme of the filtration device 10 provides that - in a logical sense - the flat filters 24 of the upper group 32 are connected in parallel and the flat filters 24 of the lower group 34 are likewise connected in parallel, whereas the entirety of the flat filters 24 of the upper group 32 and the entirety of the flat filters 24 of the lower group 34 are connected in series.

Preferably, all of the flat filters 24 are shaped identically. This means that the two-dimensional size and shape of the flat filters 24 are the same, whereas material, (vertical) thickness, nominal pore size, nominal filter retention (efficiency), nominal volume flow, and other parameters of the flat filters 24 may vary, according to the desired filtration process to be conducted in the filtration device 10. For example, all flat filters 24 of the upper group 32 could serve as pre-filters (e.g., with a nominal pore size of 0.45 µm) and all flat filters 24 of the lower group 34 could serve as main filters (e.g., with a nominal pore size of 0.2 µm). In this case, apart from other possible differences, the nominal pore size of the flat filters 24 of the upper group 32 would be larger than the nominal pore size of the flat filters 24 of the lower group 34.

The number of the filter supports 28 in the upper group 32 and in the lower group 34, and thus the number of flat filters 24 in the upper group 32 and in the lower group 34, can be chosen according to the desired total filter area through which the medium to be filtered shall pass from the unfiltrate side to the filtrate side, or according to the required filter area to achieve the desired filtration result or yield. In the embodiment shown in Figures 2 and 3, the ratio of the total filter area of the upper group 32 to the total filter area of the lower group 34 would be 4:3 (four flat filters 24 in the upper group 32 vs. three flat filters 24 in the lower group 34), under the assumption that all flat filters 24 on the filter supports 28 have the same individual filter area. If another filter support plate 22 supporting two more flat filters 24 was added to the lower group 34, for example, the ratio would change to 4:5.

Typically, the intermediate element 30 itself does not have a filter support 28 for supporting a flat filter 24. However, it is generally possible to configure the intermediate element 30 to have a filter support 28 carrying a flat filter 24 on its upper side. This filter support 28 with its flat filter 24 would belong to the upper group 32. A filter support 28 carrying a flat filter 24 may also be provided on the lower side of the intermediate element 30, which would belong to the lower group 34.

Of course, the concept of having certain groups of (parallel) flat filters 24 separated by an intermediate element 30 is not limited to two. This means that more than one intermediate element 30 can be inserted in the stack of filter support plates 22, thus creating one further group per intermediate element 30. For example, with two intermediate elements 30 three groups of filter supports 28 are created, with three intermediate elements 30 four groups are created, etc.

In the case that (at least) a second intermediate element 30 is present, the second collecting paths are then provided by the second intermediate element 30 arranged between the lower group 34 and a further group of filter supports 28 below the second intermediate plate 30. The same applies with respect to any further intermediate element 30 that is added.

Figure 4 shows a variant of the filtration device 10 with an intermediate element 30 providing an additional functionality. In particular, the intermediate element provides a venting means to allow air to escape from the inside of the filtration device 10. The venting means is formed by a venting passage 38 at the outer periphery of the intermediate element 30. The venting passage 38 connects the flow path section leading through the intermediate element 30 with the environment. Alternatively or additionally, the venting passage 38 connects the flow path subsequent to the intermediate element 30 with the environment (not shown in Figure 4). In order to allow only gas to escape and to keep the medium inside the filtration device, an inlet of the venting passage 38 is sealed with a hydrophobic membrane 40, such as a membrane made of PTFE. The venting passage 38 may further be equipped with a valve (not shown) for controlled blocking and (gradually) opening the venting passage 38.

The venting passage 38 may not only be used for venting, but also for performing an integrity test of the flat filters 24, such as a pre-use post-sterilization integrity test (PUPSIT). In this case air or another gas is pumped from the outside into the filtration device 10 via the venting passage 38.

The intermediate element 30 may include other functional structures and/or components, such as a sampling port. The sampling port may be equipped with a valve or the like to allow controlled taking of a sample.

While the above-described embodiments of the filtration device 10 have a central unfiltrate inlet 14, a central vertical filtrate collection channel 26 and a central filtrate outlet 18, any of these structures or components may be positioned at or near the outer periphery of the filtration device 10, following a different concept of routing the medium through the filtration device 10. However, the functions provided by the intermediate element(s) 30 are the same.

All of the described embodiments have in common that the filtration device 10 has a very compact design and a very small holdup volume.

The filtration device 10 is conceived as a single-use device. Accordingly, all components of the filtration device 10 are made from materials, typically plastic materials, which are suitable for common sterilization techniques, especially gamma sterilization or other radiation sterilization types, steam sterilization using an autoclave, and chemical sterilization, e.g., with ethylene oxide (ETO). "Suitable" here means that the relevant material properties, such as stability, brittleness etc., are not significantly affected by the sterilization process.

The main field of application of the filtration device 10 is the biopharmaceutical sector, especially when interconnected filtration steps are desired and/or low process volumes are required. In this context, typical filtration processes include, e.g., sterile filtration, virus filtration (pre- and main filtration), redundant sterile filtration, multi-stage filtration, cell clarification and depth filtration.

The filtration device 10 may also be employed in the field of personalized medicine, using Advanced Therapy Medicinal Products (ATMPs), with low process volumes.

According to another kind of application, the filtration device 10 can be used as a stackable air filter, including hydrophobic flat filters 24. Another option is using the filtration device 10 as a barrier filter, including a combination of hydrophilic and hydrophobic flat filters 24. For example, one filter support plate 22 (upper group 32) carries hydrophobic flat filters 24, another filter support plate 22 carries hydrophilic flat filters 24, and/or the bottom cover 16 carries a hydrophilic flat filter 24 (lower group 34). It is also conceivable to use hydrophilic and hydrophobic flat filters 24 on the same filter support plate 22, with the hydrophilic flat filter 24 sealed on the bottom side and the hydrophobic flat filter 24 sealed on the upper side.

### List of Reference Signs

- 10: filtration device
- 12: top cover
- 14: unfiltrate inlet
- 16: bottom cover
- 18: filtrate outlet
- 22: filter support plate
- 24: flat filter
- 26: vertical filtrate collection channel
- 28: filter support
- 29: filtrate guiding channels
- 30: intermediate element
- 32: upper group of filter supports and flat filters
- 34: lower group of filter supports and flat filters
- 36: vertical passageway
- 38: venting passage
- 40: hydrophobic membrane
- A: vertical direction

## Claims

1. A filtration device (10) for filtering a medium, in particular a small-scale filtration device for the production and/or processing of biopharmaceuticals, the filtration device (10) comprising
a top cover (12) having an unfiltrate inlet (14) and a bottom cover (16) having a filtrate outlet (18), and
a plurality of filter supports (28), arranged as a stack between the top cover (12) and the bottom cover (16) along a vertical axis,
each filter support (28) being provided with a flat filter (24), especially a membrane, each flat filter (24) being sealed to the filter support (28) with a filtrate side facing the respective filter support (28) and an unfiltrate side facing away from the respective filter support (28),
the filtration device (10) further comprising one or more intermediate elements (30), preferably one or more intermediate plates,
a first intermediate element (30) being arranged between the stacked filter supports (28), dividing the filter supports (28) into an upper group (32) above the first intermediate element (30) and a lower group (34) below the first intermediate element (30),
first distribution flow paths leading from the unfiltrate inlet (14) to all unfiltrate sides of the flat filters (24) of the upper group (32),
the first intermediate element (30) having a structure that blocks the first distribution flow paths from reaching the unfiltrate sides of the flat filters (24) of the lower group (34) and provides first collecting paths for collecting the medium that has passed through the flat filters (24) of the upper group (32),
second distribution flow paths leading from the first collecting paths to all unfiltrate sides of the flat filter(s) (24) of the lower group (34),
second collecting paths for collecting the medium that has passed through the flat filter(s) (24) of the lower group (34).

2. The filtration device according to claim 1, **characterized in that** all or several of the filter supports (28) are provided on disc-shaped filter support plates (22) which are stacked between the top cover (12) and the bottom cover (16), wherein preferably one filter support (28) is provided on the upper side of each filter support plate (22) and another filter support (28) is provided on the lower side of each filter support plate (22).

3. The filtration device according to claim 1 or 2, **characterized in that** one filter support (28) is provided on the lower side of the top cover (12) and/or on the upper side of the bottom cover (16).

4. The filtration device according to any of the preceding claims, **characterized in that** the filter supports (28) provide flow paths leading to at least one vertical filtrate collection channel (26) formed by corresponding openings of the filter supports (28), the first intermediate element (30) providing a horizontal barrier in the vertical filtrate collection channel (26) forcing the medium collected by the filter supports (28) of the upper group (32) in an upper portion of the vertical filtrate collection channel (26) above the horizontal barrier to flow to the second distribution flow paths.

5. The filtration device (10) according to claim 4, **characterized in that** the second collecting paths are
at least partially provided by the filter support(s) (22) of the lower filter supports (28) and lead to a lower portion of the vertical filtrate collection channel (26) below the horizontal barrier, and/or
provided by a second intermediate element (30) arranged between the lower group (34) and a further group of filter supports (28) below the second intermediate plate.

6. The filtration device (10) according to any of the preceding claims, **characterized in that** at least some of the filter supports (28) are shaped identically, preferably all of the filter supports (28) of the upper group (32) and/or all of the filter supports (28) of the lower group (34).

7. The filtration device (10) according to any of the preceding claims, **characterized in that** the flat filters (24) of the upper group (32) have characteristics different from the characteristics of the flat filters (24) of the lower group (34), especially with respect to nominal pore size and/or nominal filter retention and/or nominal volume flow.

8. The filtration device (10) according to any of the preceding claims, **characterized in that** at least some of the flat filters (24) are shaped identically, preferably the flat filters (24) of the upper group (32) and/or the flat filters (24) of the lower group (34).

9. The filtration device (10) according to any of the preceding claims, insofar as they refer to claim 2, **characterized in that** the top and bottom covers (12, 16), the filter support plates (22) and the intermediate element(s) (30) have outer welding sections welded to each other so as to form a closed and rigid outer housing portion of the filtration device (10).

10. The filtration device (10) according to any of the preceding claims, insofar as they refer to claim 2, **characterized in that** the top and bottom covers (12, 16) and the filter support plates (22) have a circular outer periphery with similar outer diameters with respect to the vertical axis.

11. The filtration device (10) according to any of the preceding claims, **characterized in that** at least one of the intermediate elements (30) provides a venting means, the venting means including a venting passage (38) and preferably further including a valve, the venting passage (38) preferably being formed at the outer periphery of the intermediate element (30), an inlet of the venting passage (38) is sealed with a hydrophobic membrane (40).

12. The filtration device (10) according to any of the preceding claims, **characterized in that** at least one of the intermediate elements (30) provides, or is connected to, a sampling port.

13. A method of assembling a filtration device (10) according to any of the preceding claims for a desired filtration process to be conducted with the filtration device (10), **characterized by** the following steps:
- determining a number of filtration stages required by the filtration process;
- determining a number of different groups (32, 34) of filter supports (28), each group (32, 34) corresponding to one of the filtration stages;
- determining a number of intermediate elements (30) based on the number of different groups (32, 34);
- selecting a suitable flat filter type for each group (32, 34);
- determining a total filter area for each group (32, 34);
- determining a number of flat filters (24) and a number of filter supports (28) based on the respective total filter area for each group (32, 34);
- sealing the flat filters (24) onto the filter supports (28) of the respective group (32, 34);
- building a stack of the filter supports (28) of each group (32, 34); and
- stacking the groups (32, 34) with the intermediate element(s) (30) inserted between the groups (32, 34) in an order corresponding to an order of the filtration stages.

14. The method according to claim 13, characterized either by the following further steps:
- welding the filter support plates (22) and the intermediate element(s) (30) together;
- welding an uppermost filter support plate (22) to the top cover (12) and/or welding a lowermost filter support plate (22) to the bottom cover (16);
or **characterized by** the following further step:
- inserting the filter support plate(s) (22) and the intermediate element(s) (30) between the groups (32, 34) of the filter supports (28) into a housing, the housing including the top cover (12) and the bottom cover (16).

15. A method of conducting a filtration process using a filtration device (10) according to any of claims 1 to 12, **characterized in that** the filtration process is or includes one of the following: sterile filtration, virus filtration (pre- and main filtration), redundant sterile filtration, multi-stage filtration, cell clarification, and depth filtration.
